(19)

Europäisches
Patentamt
European
Patent Office
Office européen
des brevets

(11) **EP 2 102 490 B1**

(12) **EUROPEAN PATENT SPECIFICATION**

(45) Date of publication and mention
of the grant of the patent:
**28.03.2018 Bulletin 2018/13**

(21) Application number: **07849692.4**

(22) Date of filing: **17.12.2007**

(51) Int Cl.:
*F03B 17/00* *(2006.01)*    *F03G 7/04* *(2006.01)*

(86) International application number:
**PCT/IS2007/000023**

(87) International publication number:
**WO 2008/072262 (19.06.2008 Gazette 2008/25)**

(54) **GEOTHERMAL ENERGY SYSTEM**

SYSTEM FÜR GEOTHERME ENERGIE

SYSTÈME D'ÉNERGIE GÉOTHERMIQUE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **15.12.2006 IS 8580
14.02.2007 IS 8610**

(43) Date of publication of application:
**23.09.2009 Bulletin 2009/39**

(73) Proprietor: **Jonsson, Olafur
220 Hafnarfjordur (IS)**

(72) Inventor: **JONSSON, Olafur
Fuijan (CN)**

(74) Representative: **Arnason Faktor
Intellectual Property Consulting
Gudridarstig 2-4
113 Reykjavik (IS)**

(56) References cited:
**EP-A- 1 609 988**       **US-A- 4 201 060**
**US-A1- 2006 137 349**

- **DUCHANE D V: "Progress in making hot dry rock
geothermal energy a viable renewable energy
resource for America in the 21st century"
ENERGY CONVERSION ENGINEERING
CONFERENCE, 1996. IECEC 96., PROCEEDINGS
OF THE 31ST INTERSOCIETY WASHINGTON, DC,
USA 11-16 AUG. 1996, NEW YORK, NY, USA, IEEE,
US, vol. 3, 11 August 1996 (1996-08-11), pages
1628-1632, XP010197978 ISBN: 0-7803-3547-3**

EP 2 102 490 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates to the use of renewable energy sources for the production of electrical energy. Moreover, the present invention includes a method and a system to recover energy in two different power generation systems using the same energy source.

### Background of the invention

The traditional use of wind, water, and solar power is well known in the art, and an increasing yet still minor contributor of electrical energy in developed as well as developing countries. Environmental issues are the major promoting force for mass production of electricity by the use of renewable energy sources to resist increasing risks of climate change due to carbon emission and other pollution, exhaustion of fossil fuels and the environmental risks associated with nuclear power.

It is well known in the art to generate hydroelectricity from hydropower plants by the load of elevated water sources (the hydraulic head) to drive a water turbine and generator to produce electrical energy. This process of producing electrical energy is dependent on volume as well as a natural difference in height between the intake of water and the outlet of the water, by allowing the water to run through a tunnel shaped structure (penstock). Frequently, large dams are required, which are costly and affect the environment.

Another way of energy production is the use of geothermal power plants in areas of the world where geothermal heat is present at relatively shallow depth. By drilling tunnels or wells until they reach natural fractures in the ground, hot water or steam either flows up or is pumped up. Geothermal energy can be generated several ways such as using dry steam to drive turbines and generators or by using steam-water separators to separate steam from boiling water flowing from an underground source and then using the steam to drive a turbine, which spins a generator. Methods of deep drilling are being developed and geothermal power plants being built which reach deeper into the earth to reach heat. In such power systems, wells are drilled into known geothermal reservoirs where temperatures often exceed 360°C. Steam or super-heated water is brought to the surface under its own pressure where the energy, in the form of steam, is utilized to turn the turbines of an electrical generator. In these systems, the carrier in the form of pressurised water or steam is essential, which limits useful areas for unleashing geothermal energy.

Methods have also been investigated where water is pumped down and passed through fractures sufficiently deep underground where the rock has a temperature of 140C or higher, thus the rock is used as a heat exchanger and the water penetrating the fracture is brought to the surface again where its heat is tapped. This technology has been referred to as "Hot Dry Rock" technology. Experimental systems have been setup (Los Alamos, USA, Hijion, Japan and Cornwall, UK), providing temporary power plants of a few MW and further experiments are ongoing, e.g. in Soultz-sous-Forêts in France and in Urach, Germany. The initial "Hot Dry Rock" concept was based on the assumption that deep crystalline basement rock formations are nearly dry and impermeable for fluids due to the pressure of the overburden rock. Therefore, it was suggested to induce artificial fractures acting as heat exchange surfaces, through which fluid could be circulated via boreholes penetrating these fractures.

- US 2006/0137349 discloses a geothermal power plant system for producing electricity and process heat using a compressed gas storage device and a gas compression device connected to the compressed gas storage device. This allows for the combination of fluctuating renewable forms of energy and energy storage devices without causing an unfavorable CO2 emission. A gas utilization device is connected to the compressed gas storage device to enable more efficient economical utilization of harvested energy from the system.

Alternative methods to produce energy on large-scale from renewable non-polluting sources are still very much appreciated and useful.

### Summary of the invention

The invention provides a method and system for tapping geothermal energy, which are not limited by plentiful supplies of hot ground water. The invention is based on the premise that heat is ubiquitous underneath earth's surface although the temperature-depth gradient varies depending on local variations in the crust of the earth. Useful geothermal areas using available technologies are primarily found in volcanic regions in vicinity of tectonic plate boundaries where the crust is thin and hot magma is closer to earth's surface. The continental crust is generally 20-70 km thick, however, the oceanic crust (sima) is thinner, generally 5-10 km thick. Underneath the crust lies the upper mantle layer. The temperature of the crust ranges from the air temperature to about 900°C close to the upper mantle.

Instead of relying on underground hot water supplies in geothermal areas or pumping down water through a 'Hot Dry Rock' heat exchanger, the invention introduces a novel concept of guiding seawater/freshwater to geothermal vaults where the water is heated and acts as a heat carrier to bring thermal energy from hot underground areas to the surface where the thermal heat is converted to electrical energy.

Several basic configurations have been developed based on the same main concept and the choice of a particular configuration will depend on the local geographic circumstances and the desired amount of energy.

The method utilises seawater/freshwater as a carrier of thermal energy from underground geothermal heat sources. In preferred embodiments the difference in height of the sea water source and the geothermal heat source is used to create a hydrodynamic head which is utilised to drive a hydropower plant and thus the water serves as a dual energy carrier, of potential energy and thermal energy.

In a first aspect the present invention relates to a method for power generation. The method comprises in its simplest form the steps of:

- providing a geothermal underground dry space with a hot ambient temperature,
- providing a passageway leading from an intake at the bottom of the ocean to said geothermal underground dry space,
- allowing seawater/freshwater to flow from said intake at the bottom of the ocean through said passageway to said geothermal underground dry space,
- providing a duct for hot water or steam to escape upwardly from said geothermal underground dry space towards the surface of the ground, and
- converting thermal energy from said hot water or steam to electrical energy.

It is a premise of the invention to find a suitable geothermal underground dry space. State of the art methods for exploring the earth's crust, e.g. developed in the field of searching for oil and gas reserves are very useful in this regard. It is contemplated that in several locations in the world suitable conditions exist, especially in the vicinity of volcanic areas and close to coastal areas with a shallow coastal shelf close to the bathyal zone, i.e. where the land is close to deep sea. Such areas are often found by volcanic islands, e.g. the Westmann Islands south of Iceland.

In an embodiment the method further comprises guiding seawater/freshwater from an intake at the bottom of the ocean into a first penstock tunnel leading downwardly towards a lower point beneath the ocean bottom. Seawater/freshwater is guided through the tunnel into an underground hydropower unit comprising means to extract mechanical energy from the flowing seawater/freshwater and means for converting the mechanical energy into electrical energy. Thereafter the seawater/freshwater is lead from the hydropower unit into the geothermal underground dry space, where the seawater/freshwater absorbs heat from the surrounding hot rock and consequently temperature and pressure of the water increases. The pressurised hot water or steam from the underground dry geothermal area is then allowed to escape through one or more ducts to the surface of the earth into a geothermal power station leading the hot water or steam through means to extract thermal energy and converting the thermal energy into electrical energy.

In a second aspect the present invention relates to a power generation system which operates based on the principles and methods of the invention. The power generation system comprises

- a geothermal underground dry space with a hot ambient temperature,
- a water intake at the bottom of the sea or ocean,
- a passageway leading from said water intake to said geothermal underground dry space, allowing water to flow from said water intake to said geothermal underground dry space,
- a duct for allowing hot water or steam to escape upwardly from said geothermal underground dry space towards the surface of the ground,
- means for converting thermal energy from said hot water or steam to electrical energy.

The seawater/freshwater is guided through a first underground powerhouse at the end of the inlet tunnel, where the powerhouse comprises means to extract mechanical energy from the flowing seawater/freshwater and means for converting the mechanical energy into electrical energy. After the seawater/freshwater flows from the powerhouse it is lead into one or more transport tunnels for guiding the seawater/freshwater from into an underground dry geothermal area, where the seawater/freshwater is heated up to a boiling point. The system further comprises one or more outlet ducts for allowing hot water or steam from the geothermal underground dry space to the surface of the earth, where it goes through a power station comprising means to extract thermal energy and means for converting the thermal energy into electrical energy.

**Description of Figures**

Figure 1 is a schematic drawing of an embodiment of the present invention, where seawater is directed into a geothermal area from the sea at a great depth for producing geothermal energy at a geothermal power station.

Figure 2 is a schematic drawing of an embodiment of the present invention, where seawater is directed through underground power stations into a geothermal area from the bottom of the ocean for energy recovery from both a hydropower station and a geothermal power station.

Figure 3 is a schematic drawing of an embodiment similar to the one shown in fig. 2, but where the sea water passes two hydropower systems before entering the geothermal area.

## Detailed description of the invention

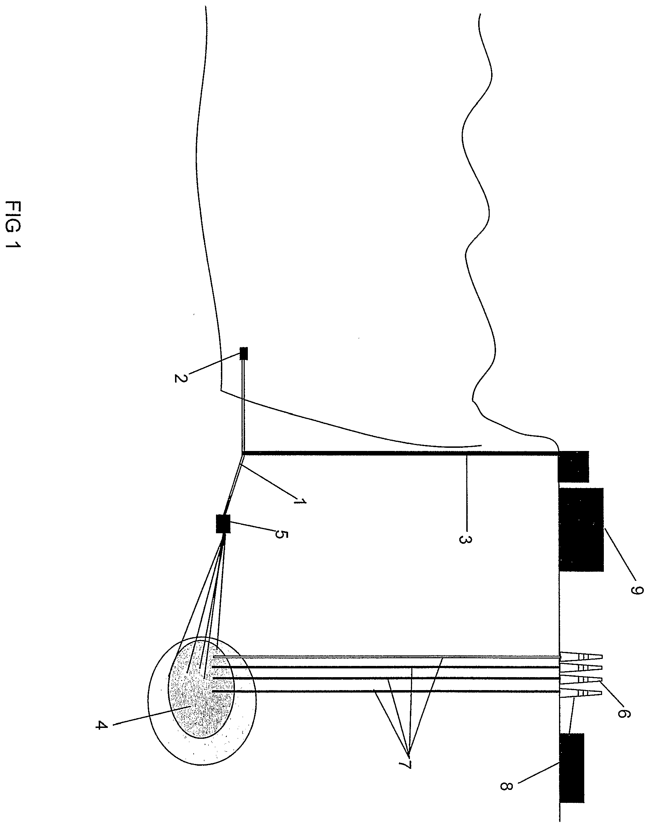

An embodiment of the "basic" configuration of the invention is shown in Fig. 1, where seawater is lead directly to a geothermal underground dry space, i.e. without passing through a hydropower unit. In the embodiment shown, the intake for the seawater is at a greater sea depth. A horizontal intake tunnel 1 leads from an intake valve 2 to an access tunnel 3, where the tunnel takes a diagonal direction towards a geothermal area 4. The downwards slope of the second part of the tunnel gives the seawater speed to penetrate the check valve 5 and to migrate into the geothermal area 4. The selected geothermal area is positioned under the mainland/island, where the geothermal power 6 plant is positioned. The steam generated in the geothermal area, when water is directed there in, is lead by pipes 7 into a power station. Electricity is generated in the power station 8 by generators through turbines driven by the steam from the tunnels. In the embodiment, the power generated in the geothermal power plant is used for generating hydrogen in a hydrogen station 9.

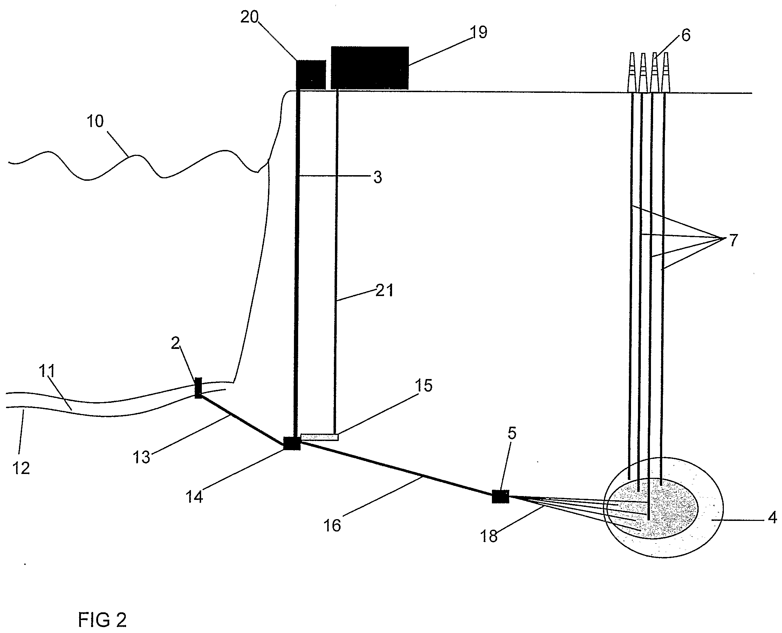

In one embodiment of the present invention an energy recovery system is disclosed, where sea water is used to generate power in two different power plant systems. The first system generates hydroelectricity through a hydropower system using water turbine(s) and generator(s). The second system a geothermal power plant using steam turbines to retrieve thermal heat and convert to electricity. Details of a particular configuration of this embodiment are shown in Fig. 2. The embodiment is not limited to the specific parameters and scale shown which are used herein to illustrate a particular embodiment. The source of water in this system is seawater 10 and the first power generation system is an underground hydropower station. A diagonal tunnel leading from an intake unit 2 at or close to the bottom of the sea/ocean 11 extending trough the ocean silt 12 to a dry geothermal area 4 is created, where the tunnel comprises three parts. The first part is a penstock 13 leading from the intake unit to a powerhouse 14, comprising a turbine hall housing water turbines. The powerhouse also comprises a transformer hall 15 containing the generator(s) for converting mechanical energy to electrical energy. The second part of the tunnel 16 leads the water from the powerhouse (after having passed through the turbines) to a valve assembly with check valves 5 (non-return valves). From the valve assembly a plurality of tailrace tunnels 18 lead into the geothermal area 4. It is a useful option to be able to divert the water selectively to one or more selected tailrace tunnels.

The second system (the geothermal power plant) is positioned above the geothermal dry space, where several vertical or semi-vertical ducts or tunnels 7 allow hot water and/or steam to escape from the geothermal space.

The penstock tunnel 13 receives seawater from an intake structure 2 which can comprise a valve as shown in Fig. 2. The valve comprises a valve chamber building penetrating the ocean bottom 11 and a valve chamber above the bottom with an intake portion for providing an entry or the seawater into the penstock 13. In the particular embodiment shown in Fig. 2, the intake valve is placed at a depth of the sea floor of about 600m below the sea surface. The difference in height (head) between the intake valve and the powerhouse is 1200m. A sub station (power station) 19 and a control building 20 are positioned above the powerhouse 14 with an access tunnel 3 between the control building 20 and the underground powerhouse 14. The access tunnel 3 further comprises a service elevator for maintenance of the underground facilities. A cable tunnel 21 extends between the sub-station 19 and the transformer hall 15 for transferring the generated electricity to the sub-station 19 for distribution there from. The tunnel 16 from the power house to the check valve 5 has the additional function of generating extra weight/momentum of the water entering the valve assembly. The head of the tunnel from the power house in this embodiment is 600m. After the valve assembly, the tunnel is divided into a plurality of tailrace tunnels 18. Each tailrace extends through a tailrace area into the dry geothermal area where the temperature of the water increases.

The second system consists of a plurality of tunnels which are drilled from land, into the geothermal area. A geothermal power plant 6 is positioned over the tunnels 7, where steam turbines harness thermal energy from steam/pressurised water from the tunnels.

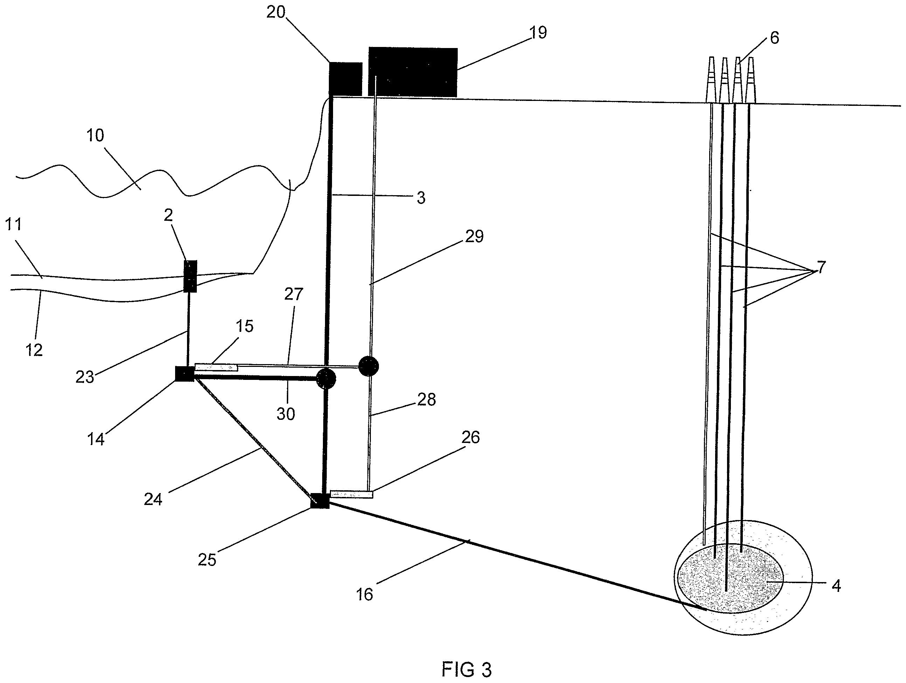

The system shown in Fig. 3 is a modified embodiment of the system shown in Fig. 2. A generally vertical intake penstock 23 is provided leading from an intake unit 2 as described above at the bottom of the sea/ocean 11 to a first hydropower house 14, comprising one or more water turbines. The vertical penstock tunnel receives seawater in the same way as shown in Fig. 2, where an intake above the sea bottom provides an entry for the seawater into the intake penstock 23. The head to the first powerhouse is 600m in this embodiment. The first powerhouse is connected to a first transformer hall 15 containing one or more generators for converting mechanical energy to electrical energy. The second part of the tunnel is a diagonal penstock tunnel 24 which transports the seawater from the first powerhouse 14 a second power house 25, also comprising one or more water driven turbines. The second powerhouse 25 is at 1200 m and is connected to a second transformer hall 26 containing one or more generators for converting mechanical energy to electrical energy. A horizontal cable tunnel 27 from the first transformer hall 15 coincides with a vertical cable tunnel 28 from the second transformer hall 26 and a joint cable tunnel 29 then leads to the substation 19. A sub station 19 and a control building 20 are positioned approximately above the second powerhouse 25 with a vertical access tunnel 3 between the control building 20 and the second powerhouse 25. A horizontal access tunnel 30 from the first powerhouse 14 meets the vertical access tunnel 3 between the control building 20 and the second powerhouse 25, to provide access to the first power house 14 as well. The horizontal access tunnel 29 is parallel to the horizontal cable tunnel 27 from the first transformer hall 15 to the vertical cable tunnel 28. The vertical access tunnel 3 further comprises a service elevator for maintenance of the underground facilities. No check valve is shown in this embodiment, but the presence of a check valve will depend on the pressure in the geothermal area 4 inhibiting the seawater to be transported down the penstock tunnel leading from the second powerhouse into the geothermal area 4. The second power generation system identical to the geothermal power plant shown in Fig 2.

In an embodiment of the present invention a method is disclosed for energy recovery where the same natural source is used to generate energy in two different power generation processes. The first power generation processes uses a hydropower station to generate hydroelectricity and the second power generation processes involves a geothermal power plant to generate electricity from steam. The natural source used in the method of the present invention is seawater. Seawater is received through an intake unit at the bottom of the ocean and directed to an underground power station through a diagonal or a vertical penstock. The seawater passes through a powerhouse driving one or more turbines. The mechanical energy produced by the turbines is converted to electrical energy by generators using electromagnetic induction. An optional step is leading the seawater further underground through a second penstock to a second powerhouse generating additional mechanical energy to be converted by generators into electrical energy. The next step involves leading the water optionally through a check valve into one or more tailrace tunnels into the dry geothermal area. When the water enters the geothermal area the temperature of the water increases and pressure will build up. The steam is lead through tunnels between the main land/island and the geothermal area to a geothermal power plant over the tunnels. The steam from the geothermal area drives the turbines geothermal power plant to generate mechanical energy which is converted to electrical energy by generators. The drainage from the geothermal power plant can be lead through tunnels, which have power house(s) comprising water turbines, back into the underground geothermal area. In this manner a circulation is created, where geothermal energy and hydraulic energy are generated in one system.

In an embodiment of the present invention, the water from the last powerhouse is lead through a closed system into the underground geothermal area and up through the tunnels to the geothermal power plant.

In an embodiment of the present invention, the intake of seawater is on land and the seawater is pumped for a shorter or longer distance to the intake. This embodiment is useful, where drilling for penstock at the bottom of the ocean is difficult or impossible. The power required for pumping seawater for a shorter distance onto land is proportionally small as compared to the energy generated in the power generation system of the present invention. Other advantages by pumping seawater onto land are better filtering options in order to protect the underground power generation system (generators and turbines), as well as causing less environmental damage to the bottom of the ocean.

In another embodiment of the present invention, the intake of water into the system is intake of freshwater from an estuary of a river. The estuary is near the sea, where fresh water and salt water mix. In this embodiment the water intake collects the water before it mixes with the seawater. In this embodiment the water is moving as it approaches and enters the intake, which is beneficial to the velocity of the water in the penstock. Such a set up requires a filtering mechanism/strainer or sift to prevent mud and sand or rocks carried forward by the river to end up in the energy recovery system. Freshwater can also be collected from a freshwater lake, which solves problems caused by salt in the power houses. Examples of such lakes are lagoons or reservoirs which are filled by glacier-melt-water. The intake for this embodiment can be placed in a pier of a bridge crossing a river. The pier will then serve as an access point to the intake for service etc.

In an embodiment of the present invention the penstock leads from the bottom of the sea and to a underground geothermal area situated under a dry area or a desert, such as the Sahara desert. The steam or hot water will be guided from the hot area up to the desert. In this manner energy is generated by power stations in the pipeline from the bottom of the sea and to the hot area. The steam and water that is guided from the hot area through the steam power plant and can be used to facilitate growth of plants in dry areas, where growth of plants is difficult or impossible.

In an embodiment of the present invention the penstock can be directed around a igneous intrusion such as a laccolith in order to heat the water from the intake.

In the present context the term "penstock" relates to tunnels, sluices or gates for enclosed flow of water, such as an enclosed pipe structure that deliver water to hydraulic turbines in a hydraulic power generation system. The penstock of the present invention can be formed by drilling or using explosions or both. In certain areas, it is advantageous to heat/burn the inner surface of the penstock to prevent the seawater to mix/react with chemical substances in the rock. The penstock can also be provided with a liner/feed such as a tube/pipe or moulded.

In the present context the term "tailrace" refers to a duct, a race or a tunnel for conveying water away from a power station after having released its kinetic energy to a turbine. The diameter of a tailrace can be of various sizes, depending on the nature of the geothermal area, such as in the range of 25-100 cm in diameter, but also from 100 - 5000 cm.

In the present context the terms "powerhouse", "power station" and "power plant" refer to a facility for the generation of electric power. Such a facility comprises means for extracting mechanical energy from flowing water, usually a turbine, as well as means for converting mechanical energy into electrical energy, generally a generator. The generator may also be placed in a separate housing (transformer hall).

Generators and turbines are well known in the art will not be their function will not be discussed herein.

## Examples

Example 1

Calculations of flow to power plant and production of electricity thereof.

| Calculations of depth and length | | | | calculated value |
|---|---|---|---|---|
| Depth of sea | $h1$ | 200,00 | m | |
| Depth to power plant | $h2$ | 600,00 | m | |
| Depth to end point of drain pipeline | $h3$ | 600,00 | m | |
| Total depth to power plant | $z1$-$z2$ | 800,00 | m | * |
| Total depth | $z1$-$z3$ | 1.400,00 | m | * |
| Angle of supply pipeline | $Ø2$ | 90,00 | ° | |
| Angle of drain pipeline | $Ø3$ | 30,00 | ° | |
| Pressure at sea level | $p1$ | 0,00 | kPa | |
| Pressure at power plant | $p2$ | 0,00 | kPa | |
| Length of supply pipeline | $L2$ | 600,00 | m | * |
| Length of drain pipeline | $L3$ | 1.200,00 | m | * |
| Pressure difference | $Dp$ | 0,00 | kPa | * |
| | | | | |
| **Physical properties of pipeline and other** | | | | |
| Pipeline | $D$ | 7,5 | m | |
| Coefficient of friction | $f$ | 0,01 | | |
| Gravitational acceleration | $g$ | 9,8 | m/sec$^2$ | |
| density of sea | $r_{sjór}$ | 1025 | kg/m$^3$ | |
| Coefficient of friction for power plant | $K$ | 0,85 | | |
| Loss in production of electricity | $K_1$ | 0,85 | | |
| | | | | |
| **Flow calculations** | | | | |
| Flow speed | $v$ | 53,15 | m/sec | * |
| Flow | $Q$ | 1,20 | m$^3$/sec | * |
| | | | | |
| **Power calculations** | | | | |
| Power in flow of water | $P_w$ | 2.890,05 | MW | * |
| **Possible production of** | **$P$** | **1.011,52** | **MW** | |

**Flow**  **Loss**

$$p_2 + \tfrac{1}{2}\rho v_2^2 + \rho g z_1 = p_3 + \tfrac{1}{2}\rho v_3^2 + \rho g z_2 + \sum frictionloss \qquad \Delta h_{pipe} = \frac{4fL\rho v^2}{2gD}$$

$\Leftrightarrow$ Assume $v_1 = 0m$ /s and $p_1 - p_2 = \Delta p$

$$z_1 = z_2 + \Delta p + \frac{v_2^2}{2g} + \frac{4fL}{D}\frac{v_2^2}{2g} + 0.5\frac{v_2^2}{2g} + K\frac{v_2^2}{2g} \qquad h_{int\,ake} = 0.5\left(\frac{v^2}{2g}\right)$$

$\Leftrightarrow$

$$v_2^2 = 2g\left(z_1 - z_2 - \Delta p\right)\left(1 + \frac{4fL}{D} + 0.5 + K\right)^{-1} \qquad h_{powerplant} = K\left(\frac{v^2}{2g}\right)$$

**Power in water flow**

$$P_w = 0.5K_1\rho A v^3$$

Approximation; it is assumed that there is no pressure difference and that there is no influence from the high pressure hot area (such as in a closed system).

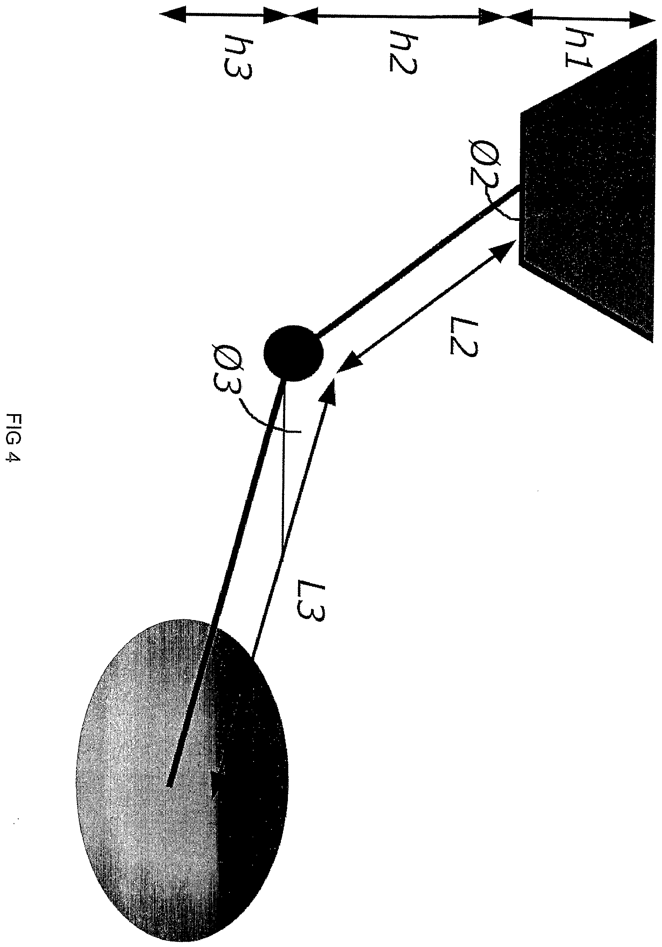

The calculations show that there is a tremendous amount of energy to be recovered from such a system (see fig. 4). Furthermore, the calculations only take into account the energy recovered from water flow to a geothermal underground dry space, but not the geothermal energy recovery system when steam or hot water rises to the surface of the earth above the geothermal underground dry space.

**Claims**

1.  A method for generating electrical energy comprising the steps of:

> - providing a geothermal underground dry space (4) with a hot ambient temperature,
> - providing a passageway (1) leading from an intake at the bottom of the ocean to said geothermal underground dry space (4),
> - allowing seawater/freshwater to flow from said intake at the bottom of the ocean through said passageway (1) to said geothermal underground dry space (4),
> - providing a duct for hot water or steam to escape upwardly from said geothermal underground dry space towards the surface of the ground,
> - converting thermal energy from said hot water or steam to electrical energy,

> **characterized in that**
> said passageway (1) leading from said intake comprises a first head section (13) with substantial downward direction creating a hydrodynamic head between the upper end and lower end of said first head section, said lower end being connected to a hydropower plant (14) comprising means to extract mechanical energy from seawater/freshwater flowing through said first head section (13) and means for converting the mechanical energy into electrical energy (15), wherein a tailrace section (18) of the passageway allows water to pass from said hydropower plant to said geothermal underground dry space (4).

2.  The method of claim 1, wherein said first head section comprises a substantially vertical penstock tunnel (23).

3.  The method of claim 1 or 2, wherein said passageway (1) further comprises a second head section (24) with an upper end and a lower end at a lower depth, creating a hydrodynamic head between the upper end and lower end of said second head section, the upper end of said second head section (24) being connected to a tailrace from said hydropower plant (14) and the lower end of said second head section being connected to a further hydropower plant (25) comprising means to extract mechanical energy from seawater/freshwater flowing through said second head section and means for converting the mechanical energy into electrical energy (26), wherein a tailrace section (18) of the passageway allows water to pass from said further hydropower plant (25) to said geothermal underground dry space (4).

4. The method according to any of claims 1-3, wherein the seawater/freshwater flowing through said tailrace passes a check valve (5), allowing control of water flow to said geothermal underground dry space (4).

5. A power generation system comprising:

   - a geothermal underground dry space (4) with a hot ambient temperature,
   - a water intake (2) at the bottom of the sea or ocean,
   - a passageway (1) leading from said water intake to said geothermal underground dry space (4), allowing water to flow from said water intake (2) to said geothermal underground dry space (4),
   - a duct (7) for allowing hot water or steam to escape upwardly from said geothermal underground dry space (4) towards the surface of the ground,
   - means for converting thermal energy from said hot water or steam to electrical energy (6),

   **characterized in that**
   said geothermal underground dry space (4) is located onshore underneath land.

6. The power generation system of claim 5, wherein said passageway (1) comprises a downwards inclination from said intake (2) to said geothermal underground dry space (4).

7. The power generation system of claim 5, wherein said means for converting thermal energy from said hot water or steam to electrical energy (6) comprise one or more steam turbines.

8. The power generation system of claim 5, further comprising an underground hydropower unit (14), wherein said passageway (1) leading from said intake (2) comprises a first head section (13/23) with substantial downward direction creating a hydrodynamic head between the upper end and lower end of said first head section, said lower end being connected to said hydropower unit (14) which comprises means to extract mechanical energy from seawater/freshwater flowing through said first head section (13/23) and means for converting the mechanical energy into electrical energy (15),
   the passageway further comprising a tailrace section (18) allowing water to pass from said hydropower plant to said geothermal underground dry space (4),
   the system further comprising transportation means to transfer the electricity (21) from the hydropower plant for desired use.

9. The power generation system of claim 8 comprising a further underground hydropower unit,

   - said passageway further comprising a second head section (24) with an upper end and a lower end at a lower depth, creating a hydrodynamic head between the upper end and lower end of said second head section,
   - the upper end of said second head section being connected to said hydropower plant (14) and the lower end of said second head section being connected to said further hydropower plant (25) which comprises means to extract mechanical energy from seawater/freshwater flowing through said second head section (24) and means for converting the mechanical energy into electrical energy (26),
   - wherein a tailrace section (18) of the passageway allows water to pass from said further hydropower plant (25) to said geothermal underground dry space (4).

**Patentansprüche**

1. Verfahren zur Erzeugung elektrischer Energie, aufweisend die Schritte:

   - Bereitstellen eines geothermischen unterirdischen Trockenraums (4) mit einer heißen Umgebungstemperatur,
   - Bereitstellen eines Durchgangs (1), der von einem Einlass am Meeresboden zu dem geothermischen unterirdischen Trockenraum (4) führt,
   - Ermöglichen, dass Meerwasser/Süßwasser von dem Einlass am Meeresboden durch den Durchgang (1) zu dem geothermischen unterirdischen Trockenraum (4) strömt,
- Bereitstellen eines Kanals für heißes Wasser oder Dampf, um aus dem geothermischen unterirdischen Trockenraum nach oben in Richtung der Oberfläche des Grunds zu entweichen,
- Umwandeln von Wärmeenergie aus dem heißen Wasser oder Dampf in elektrische Energie,

**dadurch gekennzeichnet, dass**

der von dem Einlass führende Kanal (1) einen ersten Kopfabschnitt (13) mit einer im Wesentlichen abwärtigen Richtung aufweist, der zwischen dem oberen Ende und dem unteren Ende des ersten Kopfabschnitts einen hydrodynamischen Kopf erzeugt, wobei das untere Ende mit einer Wasserkraftanlage (14) verbunden ist, die Mittel zum Extrahieren von mechanischer Energie aus Meerwasser/Süßwasser, das durch den ersten Kopfabschnitt (13) strömt, und Mittel zum Umwandeln der mechanischen Energie in elektrische Energie (15) aufweist, wobei ein Abflusskanalabschnitt (18) des Durchgangs ermöglicht, dass Wasser von der Wasserkraftanlage zu dem geothermischen unterirdischen Trockenraum (4) passiert.

2. Verfahren nach Anspruch 1, wobei der erste Kopfabschnitt einen im Wesentlichen vertikalen Druckrohrtunnel (23) aufweist.

3. Verfahren nach Anspruch 1 oder 2, wobei der Durchgang (1) ferner einen zweiten Kopfabschnitt (24) mit einem oberen Ende und einem unteren Ende in einer geringeren Tiefe aufweist, wodurch ein hydrodynamischer Kopf zwischen dem oberen Ende und dem unteren Ende des zweiten Kopfabschnitts erzeugt wird, wobei das obere Ende des zweiten Kopfabschnitts (24) mit einem Abflusskanal von der Wasserkraftanlage (14) verbunden ist und das untere Ende des zweiten Kopfabschnitts mit einer weiteren Wasserkraftanlage (25) verbunden ist, die Mittel zum Extrahieren mechanischer Energie aus Meerwasser/Süßwasser, das durch den zweiten Kopfabschnitt strömt, und Mittel zum Umwandeln der mechanischen Energie in elektrische Energie (26) aufweist, wobei ein Abflusskanalabschnitt (18) des Durchgangs ermöglicht, dass Wasser von der weiteren Wasserkraftanlage (25) zu dem geothermischen unterirdischen Trockenraum (4) passiert.

4. Verfahren nach einem der Ansprüche 1 bis 3, wobei das Meerwasser/Süßwasser, das durch den Abflusskanal fließt, ein Rückschlagventil (5) passiert, das eine Steuerung des Wasserflusses zu dem geothermischen unterirdischen Trockenraum (4) ermöglicht.

5. Energieerzeugungssystem, aufweisend:

- einen geothermischen unterirdischen Trockenraum (4) mit einer heißen Umgebungstemperatur,
- einen Wassereinlass (2) am Meeresboden oder im Meer,
- einen Durchgang (1), der von dem Wassereinlass zu dem geothermischen unterirdischen Trockenraum (4) führt, so dass Wasser von dem Wassereinlass (2) zu dem geothermischen unterirdischen Trockenraum (4) fließen kann,
- eine Leitung (7), um heißes Wasser oder Dampf aus dem geothermischen unterirdischen Trockenraum (4) nach oben in Richtung Oberfläche des Grunds entweichen zu lassen,
- Mittel zum Umwandeln von Wärmeenergie aus dem heißen Wasser oder Dampf in elektrische Energie (6),

**dadurch gekennzeichnet, dass**

der geothermische unterirdische Trockenraum (4) sich an der Küste unter Land befindet.

6. Energieerzeugungssystem nach Anspruch 5, wobei der Durchgang (1) eine Abwärtsneigung von dem Einlass (2) zu dem geothermischen unterirdischen Trockenraum (4) aufweist.

7. Energieerzeugungssystem nach Anspruch 5, wobei die Mittel zum Umwandeln von Wärmeenergie aus dem heißen Wasser oder Dampf in elektrische Energie (6) eine oder mehrere Dampfturbinen aufweisen.

8. Energieerzeugungssystem nach Anspruch 5, ferner aufweisend eine unterirdische Wasserkrafteinheit (14), wobei der von dem Einlass (2) führende Durchgang (1) einen ersten Kopfabschnitt (13/23) mit einer im Wesentlichen abwärtigen Richtung aufweist, die eine hydrodynamische Strömung zwischen dem oberen Ende und dem unteren Ende des ersten Kopfabschnitts erzeugt, wobei das untere Ende mit der Wasserkrafteinheit (14) verbunden ist, die Mittel zum Extrahieren von mechanischer Energie aus Meerwasser/Süßwasser, das durch den ersten Kopfabschnitt (13/23) fließt, und Mittel zum Umwandeln der mechanischen Energie in elektrische Energie (15) aufweist, wobei der Durchgang ferner einen Abflusskanalabschnitt (18) aufweist, der es ermöglicht, dass Wasser von der Wasserkraftanlage zu dem geothermischen unterirdischen Trockenraum (4) passiert,
wobei das System ferner Transportmittel aufweist, um den Strom (21) aus der Wasserkraftanlage zu der gewünschten Verwendung zu transferieren.

**9.** Energieerzeugungssystem nach Anspruch 8, aufweisend eine weitere unterirdische Wasserkrafteinheit,

- wobei der Durchgang ferner einen zweiten Kopfabschnitt (24) mit einem oberen Ende und einem unteren Ende in einer geringeren Tiefe aufweist, wodurch ein hydrodynamischer Kopf zwischen dem oberen Ende und dem unteren Ende des zweiten Kopfabschnitts erzeugt wird,
- wobei das obere Ende des zweiten Kopfabschnitts mit der Wasserkraftanlage (14) verbunden ist und das untere Ende des zweiten Kopfabschnitts mit der weiteren Wasserkraftanlage (25) verbunden ist, die Mittel zum Extrahieren von mechanischer Energie aus Meerwasser/Süßwasser durch den zweiten Kopfabschnitt (24) und Mittel zum Umwandeln der mechanischen Energie in elektrische Energie (26) aufweist,
- wobei ein Abflusskanalabschnitt (18) des Durchgangs ermöglicht, dass Wasser von der weiteren Wasserkraftanlage (25) zu dem geothermischen unterirdischen Trockenraum (4) passiert.


**Revendications**

**1.** Procédé pour produire de l'énergie électrique comprenant les étapes consistant :

- à fournir un espace sec souterrain géothermique (4) ayant une température ambiante chaude,
- à fournir un passage (1) allant d'une prise d'eau au fond de l'océan jusqu'au dit espace sec souterrain géothermique (4),
- à permettre à de l'eau de mer/de l'eau douce de s'écouler depuis ladite prise d'eau au fond de l'océan à travers ledit passage (1) jusqu'au dit espace sec souterrain géothermique (4),
- à fournir une canalisation pour permettre à de l'eau chaude ou à de la vapeur de s'échapper vers le haut à partir dudit espace sec souterrain géothermique vers la surface du sol,
- à convertir l'énergie thermique provenant de ladite eau chaude ou de ladite vapeur en énergie électrique,

**caractérisé en ce que**
ledit passage (1) allant de ladite prise d'eau comprend une première section de tête (13) ayant une direction substantielle vers le bas créant une tête hydrodynamique entre l'extrémité supérieure et l'extrémité inférieure de ladite première section de tête, ladite extrémité inférieure étant raccordée à une centrale hydroélectrique (14) comprenant des moyens pour extraire l'énergie mécanique de l'eau de mer/l'eau douce s'écoulant à travers ladite première section de tête (13) et des moyens pour convertir l'énergie mécanique en énergie électrique (15), dans lequel une section de canal de fuite (18) du passage permet à l'eau de passer de ladite centrale hydroélectrique au dit espace sec souterrain géothermique (4).

**2.** Procédé selon la revendication 1, dans lequel ladite première section de tête comprend une galerie en conduite forcée sensiblement verticale (23).

**3.** Procédé selon la revendication 1 ou 2, dans lequel ledit passage (1) comprend en outre une seconde section de tête (24) ayant une extrémité supérieure et une extrémité inférieure à une profondeur moindre, créant une tête hydrodynamique entre l'extrémité supérieure et l'extrémité inférieure de ladite seconde section de tête, l'extrémité supérieure de ladite seconde section de tête (24) étant raccordée à un canal de fuite de ladite centrale hydroélectrique (14) et l'extrémité inférieure de ladite seconde section de tête étant raccordée à une centrale hydroélectrique supplémentaire (25) comprenant des moyens pour extraire l'énergie mécanique de l'eau de mer/l'eau douce s'écoulant à travers ladite seconde section de tête et des moyens pour convertir l'énergie mécanique en énergie électrique (26), dans lequel une section de canal de fuite (18) du passage permet à l'eau de passer de ladite centrale hydroélectrique supplémentaire (25) au dit espace sec souterrain géothermique (4).

**4.** Procédé selon l'une quelconque des revendications 1 à 3, dans lequel l'eau de mer/l'eau douce s'écoulant à travers ledit canal de fuite passe un clapet antiretour (5), permettant la régulation du débit d'eau jusqu'au dit espace sec souterrain géothermique (4).

**5.** Système de production d'énergie comprenant :

- un espace sec souterrain géothermique (4) ayant une température ambiante chaude,
- une prise d'eau (2) au fond de la mer ou de l'océan
- un passage (1) allant de ladite prise d'eau jusqu'au dit espace sec souterrain géothermique (4), permettant à l'eau de s'écouler depuis ladite prise d'eau (2) jusqu'au dit espace sec souterrain géothermique (4),
- une canalisation (7) pour permettre à de l'eau chaude ou à de la vapeur de s'échapper vers le haut à partir dudit espace sec souterrain géothermique (4) vers la surface du sol,
- des moyens pour convertir l'énergie thermique provenant de ladite eau chaude ou de ladite vapeur en énergie électrique (6),

**caractérisé en ce que**
ledit espace sec souterrain géothermique (4) est situé à terre sous la terre.

6. Système de production d'énergie selon la revendication 5, dans lequel ledit passage (1) comprend une inclinaison vers le bas depuis ladite prise d'eau (2) jusqu'au dit espace sec souterrain géothermique (4).

7. Système de production d'énergie selon la revendication 5, dans lequel lesdits moyens pour convertir l'énergie thermique provenant de ladite eau chaude ou de ladite vapeur en énergie électrique (6) comprennent une ou plusieurs turbines à vapeur.

8. Système de production d'énergie selon la revendication 5, comprenant en outre une unité hydroélectrique souterraine (14), dans lequel ledit passage (1) allant de ladite prise d'eau (2) comprend une première section de tête (13/23) ayant une direction substantielle vers le bas créant une tête hydrodynamique entre l'extrémité supérieure et l'extrémité inférieure de ladite première section de tête, ladite extrémité inférieure étant raccordée à ladite unité hydroélectrique (14) qui comprend des moyens pour extraire l'énergie mécanique de l'eau de mer/l'eau douce s'écoulant à travers ladite première section de tête (13/23) et des moyens pour convertir l'énergie mécanique en énergie électrique (15),
le passage comprenant en outre une section de canal de fuite (18) permettant à l'eau de passer de ladite centrale hydroélectrique au dit espace sec souterrain géothermique (4),
le système comprenant en outre des moyens de transport pour transférer l'électricité (21) depuis la centrale hydroélectrique pour une utilisation souhaitée.

9. Système de production d'énergie selon la revendication 8, comprenant une unité hydroélectrique souterraine supplémentaire,

- ledit passage comprenant en outre une seconde section de tête (24) ayant une extrémité supérieure et une extrémité inférieure à une profondeur moindre, créant une tête hydrodynamique entre l'extrémité supérieure et l'extrémité inférieure de ladite seconde section de tête,
- l'extrémité supérieure de ladite seconde section de tête étant raccordée à ladite centrale hydroélectrique (14) et l'extrémité inférieure de ladite seconde section de tête étant raccordée à ladite centrale hydroélectrique supplémentaire (25) qui comprend des moyens pour extraire l'énergie mécanique de l'eau de mer/l'eau douce s'écoulant à travers ladite seconde section de tête (24) et des moyens pour convertir l'énergie mécanique en énergie électrique (26),
- dans lequel une section de canal de fuite (18) du passage permet à l'eau de passer de ladite centrale hydroélectrique supplémentaire (25) au dit espace sec souterrain géothermique (4).

FIG 1

FIG 2

FIG 3

FIG 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060137349 A